# EUROPEAN PATENT SPECIFICATION

(11) **EP 4 079 621 B1**
(45) Date of publication and mention of the grant of the patent: **31.01.2024**
(21) Application number: 21169629.9
(22) Date of filing: 21.04.2021
(51) Int. Cl.: B63B 22/02, B63B 22/04, B63B 22/18, B63B 35/44

(54) **TAIL SPAR BUOY OFFSHORE UPWIND HAWT FOUNDATION**
SCHWANZSPIERENTONNEN-OFFSHORE-AUFWIND-HAWT-FUNDAMENT
FONDATION HAWT EN AMONT EN MER POUR BOUÉE SPAR ARRIÈRE

(43) Date of publication of application: 26.10.2022
(73) Proprietor: Bandiera, Costantino, 16123 Genova (IT)
(72) Inventor: Bandiera, Costantino, 16123 Genova (IT)

(56) References cited:
- EP-A1- 2 143 629
- EP-A1- 2 409 913
- WO-A1-2006/054084
- WO-A1-2016/164573
- WO-A1-2019/217475
- WO-A1-2020/105378
- WO-A1-2020/209728
- JP-A- 2015 155 660
- US-A- 1 975 333
- US-A1- 2019 233 060

## Description

This Offshore Floating System consists in an HAWT at top of a tower on an asymmetric Spar Buoy and a turnable mooring, to keep the blades rotor unhindered windward and to get electric power to onshore.

### State of The Art

Since the ocean is flat than onshore topography, and wind tend to flow at higher and uniform speeds, thus allowing wind turbines to produce more electricity offshore. Where the water is deep, so the complexity and cost of any foundation fixed to the seabed increase, thus a floating buoy as foundation for a HAWT (Horizontal Axes Wind Turbine) becomes the reasonable solution.

At actual state of art, a HAWT is mainly composed by a nacelle containing an electrical power generator and its gear aligned with the rotor that is supporting the rotation of blades. The nacelle is positioned on the yaw active mechanical drive at top of tower, it drives the turning of the nacelle to keep the HAWT blades rotor unhindered windward, as the wind direction changes.

The term foundation here refers to the turbine tower support floating structure; it means a floating moored structure that is the base of a tower for HAWT. Actually, different types of floating foundations exist, also based on a combination of columns and tubular legs (supports), platforms, to improve stability. Main categories are three: Tension Leg Platforms (TLP), Semi-Submersible Platforms and Spar Buoys. Spar Buoys are here mainly considered. These consist of a single main cylindrical column; it having a simpler shape is lighter than any other complex platform and mainly has weight stability. In general, they should have reduced floating area at sea level, for a lower impact of waves on the structure; the shape of the horizontal section is generally symmetrical to the vertical axes, so it offers the same resistance to waves from any their provenance direction. The pitch motion is more for Spar buoys than TLP. The Spar vertical main column length below water line, it is necessary to increase the static and dynamic stability with a proper mooring system. Generally, the shell shape of any floating object and its mooring system affect its stability performance. Buoyancy and weight distribution of the hull decide its stability, depending on floating forces, by the weight of its volume shape of displaced water. An accurate design it is necessary to reduce inertial loads induced by sea motion, to obtain lower accelerations, at top of the tower. With reference to the shipbuilding state of art, the shape of vessels was developed to reduce wave resistance; the bulbous bows are commonly used. The volume of any bow bulb for a vessel it is limited by the increasing of resistance at higher speed. However, any buoy is anchored and the speed to be considered is the speed of encountered waves only, so the volume of the bulb should be increased more than what is done usual for navigating vessels.

Any type of floating foundation could be moored with different mooring anchoring systems, these are substantially composed by a combination of chain/rope lines connected with shackles to the anchoring devices to the seabed. A basic feature of any actual mooring system of wind turbine foundation floating buoys is thus that it must counteract the horizontal torque exerted on the anchoring fixed to the seabed. Generally, the mooring system types are semi-rigid to improve the stability of the floating foundation. It is relevant to note that, at the actual state of art, the yawing system of the nacelle, at the top of the tower, exposing the blades plan windward, it is the same than onshore. Any HAWT can produce with maximum efficiency and durability, when its wind turbine blades rotor is perpendicular upwind unhindered to the incoming linear wind flow. To ensure that the HAWT rotor facing unhindered into the wind, the yaw active mechanical drive at top of towers drives the turning of the nacelle containing the turbine generator, as the wind direction changes. Otherwise, the rotor will downwind. The mechanical drive, at top of the tower is a critical point of any HAWT, where inertial loads increase dynamic stresses. The yaw active mechanical drive for the turning of the nacelle could be missed only if the entire floating foundation buoy itself could yaw, so to align blades rotor upwind and to keep it along wind direction.

A light anchorage as a vessel linked at bow, it should be possible for a spar type buoy. But to get the produced electric power onshore it is important to consider the right way of the integration of electrical power cables with mooring lines, both lying down to the seabed. It is get by different methods to integrate an offshore swivel electric power line from buoy to ground with the mooring anchoring system. However all offshore installations, whether for oil and gas production or renewable energy generation, operate in the same environment. Salt atmosphere, jumps of temperature and ice formation could also affect any mechanical system. The compactness and simplicity of any type of HAWT floating structure foundation and its mooring system could reduce the stresses due to dynamic loads from winds, waves and currents, in the marine off shore environment and increase its efficiency.

### Publications / Bibliography State of Art

EP 2 409 913 A1 shows an arrangement of a HAWT, a floating foundation, and a mooring/anchoring system with integrated cable according to the prior art.

Classification B63B 35/00 provides for ships or other floating vessels adapted for special purposes, anchoring arrangements for such special vessels are classified in B63B 21/50.

WO 2006/054084 A1 shows a mooring/anchoring system with electrical arrangements, of turnable type, as in the preamble of claim 2.

KR20170098995 (A) FLOATING-BODY TYPE WIND POWER GENERATION.

US2017253305 (A1) FLOATING WIND POWER GENERATION DEVICE
KR101760501 (B1) Floating type Wind power generator
KR20170087965 (A) METHOD FOR MAINTAINING FLOATING WIND-...
CN106400760 (A) Wind energy driven floating solid gar
EP2927489 A1
EP0074938A2
WWW for translation of terms and available articles with regarding the subject for state of art purpose:
   Wikipedia, Literature References:
   [1] Ferguson, M.C., et al. (ed), Opti-OWECS final report Vol. 4: a typical design solution for an offshore wind energy conversion system, Institute for Wind Energy, Delft University of Technology, 1998.
   [2] Germanischer Lloyd, Rules and Guidelines for the Design of Offshore Wind turbines, Hamburg, Germany, 2004.
   [3] DNV, Design of offshore wind turbine structures, Det Norske Veritas, DNV-OS-J101, 2004.
   [4] Tempel, J. van der, Design of support structures for offshore wind turbines, Delft University of Technology, Section Offshore Engineering, 2006.
   [5] Verruijt, A., Offshore Soil Mechanics, Delft University of Technology, 1998.
   [6] API, Recommended Practice for Planning, Design and Constructing Fixed Offshore Platforms - Working Stress Design, American Petroleum Institute. - 1994-jgro99-Rieder.etal-Windstress.pdf.
Design of support structures for offshore wind turbines
J. van der Tempel, N.F.B. Diepeveen, D.J. Cerda Salzmann & W.E. de Vries
Department of Offshore Engineering, Delft University of Technology, The Netherlands
Comparisons of dynamical characteristics of a 5 MW floating wind turbine supported by a spar-buoy and a semi-submersible using model testing methods featured...Journal of Renewable and Sustainable Energy 10, 053311 (2018); J.Chen1,2,a), Zhiqiang Hu3, and Fei Duan4.

Literatures regarding wind waves alignment on offshore contest.

My best regards, for critical conversations to: All participants of the meeting INORE of May 2012 in Denmark, to MARIN research institute The Netherlands, to Department UNAV University of Genova, Italy.

### Disclosure of the invention

The first quality of any HAWT Offshore Floating Foundation, moored on the sea surface, it is the static and dynamic stability, when the wind blows. The start of the design is the observation and analysis of the marine natural environment where to install an operating HAWT with reference also to historic data.

Open Air Wind, sunlight, rain, salt atmosphere, low temperature and ice, sea surface waves, underwater tides and currents, are the typical offshore sea environment phenomena that affect any floating HAWT.

Wind is cause of static/dynamic instability of the floating buoy, for its direct action onto exposed high structures above sea level. As well, it is the cause of waves' formation and of their increasing on the sea surface, when wind constantly blows from one direction. It forms waves, like vibrations along the sea surface they travel for many miles.

When considering a limited area of sea surface, there could be waves originated in faraway atmospheric perturbations (generally with long wave period and length) together with waves due to local wind (with shorter period and length). In particular, during changes of wind direction, the sea environment of the local area may be often confused because wave trains interference. It is usual to consider the worst combination of waves/wind incoming directions, which acting onto the hull of a floating foundation this is the hypothesis for best dimensioning of the structure and the mooring system. Anyway, the variations of gap between local wind and wind-waves directions are limited when the wind constantly blows from one direction, then it means at best operative conditions. Therefore, it should be the hypothesis to optimise the design of a floating foundation, when it is a constant presence of wind flux.

The transition time between changes of directions, it is relative calm with absence of wind to produce power. Any HAWT only can work in the presence of wind, generally uniform and constant in verse and direction. When the local wind is beginning to blow locally from the same direction, the sea state tends gradually to be wind-waves predominant. When wind increases and blows constantly by one direction for some time, the formed waves increase, these wind-waves have with prevalence about the same direction of the wind with gaps of +/-30°; so when the wind-waves are predominant on the sea, these mainly come from a windward sector of about 60°.

Sea Waves affect all exposed surfaces close to the sea water line, all along the shell; tons of seawater rolling onto the structures. The shape of the immersed hull influences the dynamic forces and thus movements of the floating buoy. Furthermore, as incoming waves are a cyclic event with periodical rhythm and so the moored floating buoy system tends to swing. The natural resonance period of any swing of this system is to be far from the most probable period of incoming waves, so to avoid the resonance effect and the abnormal increase of the amplitude of movements.

Further, it is important to consider the underwater currents, which push on immersed structures' surfaces below sea water line. Their force, and directions depend from the morphology of the coastal seabed from tide, they could be on different directions than wind. Then the underwater currents action by pushing exposed immersed surfaces of the buoy has often a misalignment effect. Any buoy with limited immersion is less sensitive to their influence. Given the impossibility of having a float without displacement, will be necessary to optimise properly the geometry of immersed volumes, so to reduce bad influence of currents on the HAWT performance.

The analysis of how any force acts against the floating structure components, and interactions between same forces are important to optimise any type of mooring. This consists of a proper combination of rigid ropes and chains linked by shackles and it keeps the contact between the floating buoy and the anchorage. The floating foundation and its mooring system have to be capable to withstand loads originating from sea currents, waves and wind, acting on it and to minimize movement's amplitude as possible to maintain the stability and alignment of the vertical tower. The ideal target is a compact offshore HAWT foundation buoy, with lower marine impact, lower costs of construction, installation and maintenance, tantamount or more to the onshore one as per unhindered windward exposure of blades plan, alignment, stability and compactness. It is the aim of the project: to get the offshore wind power available onshore.

### Design Concept

This invention consists in Floating Foundation, it is an Asymmetric Spar Buoy moored offshore, it is the base of one vertical tower (2a) to support a HAWT (1) unhindered windward at operative height. It is connected with an electric line (6) to the seabed so to get power onshore. The presence of wind is the first operative condition of working of any HAWT and of this buoy. The natural movement of any anchored floating buoy exposed to wind flux, it is to follow leeward than the anchoring. The main design hypothesis is that when the wind blows constantly, wind-waves coming direction is predominant on other main sea forces, as, from the anchoring to the floating buoy.

This Tail Spar Buoy (3) has a closed asymmetric shell, composed by a main vertical floating cylindrical column (3a), united to differently designed appendages: aft (3b,c) and forward (3d,e). The HAWT nacelle (1a) is united to the top of the tower (2a), where blades and hub (1b) are to forward at the same side of the appendages called bow (3d, 3e). The main column (3a) gets the main weight and shape stability to the system; both the appendages enable it to expose and to keep the HAWT blades rotor unhindered upwind, with minimising the impact of the sea environment. The mooring area is at forward side of the main column below water line; it is intended where the mooring links (5f) to the anchorage system are. This Tail Spar Buoy has similar seakeeping features of a typical spar buoy, despite the influence of appendages with their own displacement. Under the hypothesis of a dominant direction of forces, it is possible to maintain all the floating area corresponding to the main column horizontal section at water level, at the same time with a proper bow to reduce the resistance to sea forces.

The forward appendage called bulbous bow, it is consisting in a cylindrical/hemispheric bulb below water line (3e) and an angulated vertical stem post from the bulb to the upper deck (3d).

The aft appendage called tail hull it is consisting of a cylindrical shell with transom stem (3c) below waterline (W.L.) and tail over structure (3d) above W.L. The wind pressure is acting on the exposed lateral surface of the tail hull (3d), then it gets a yawing moment, until the tail hull will be leeward than the bow mooring link.

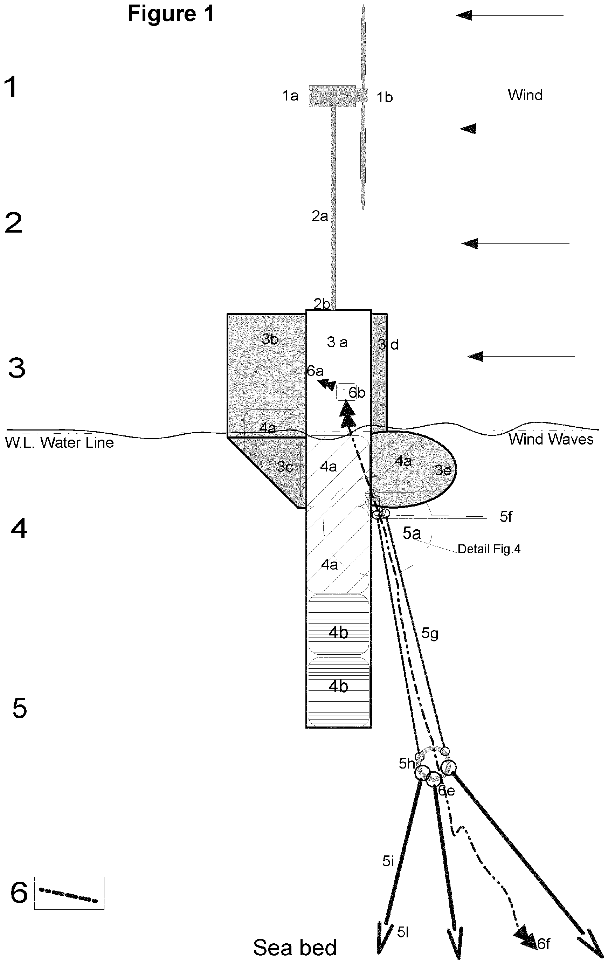

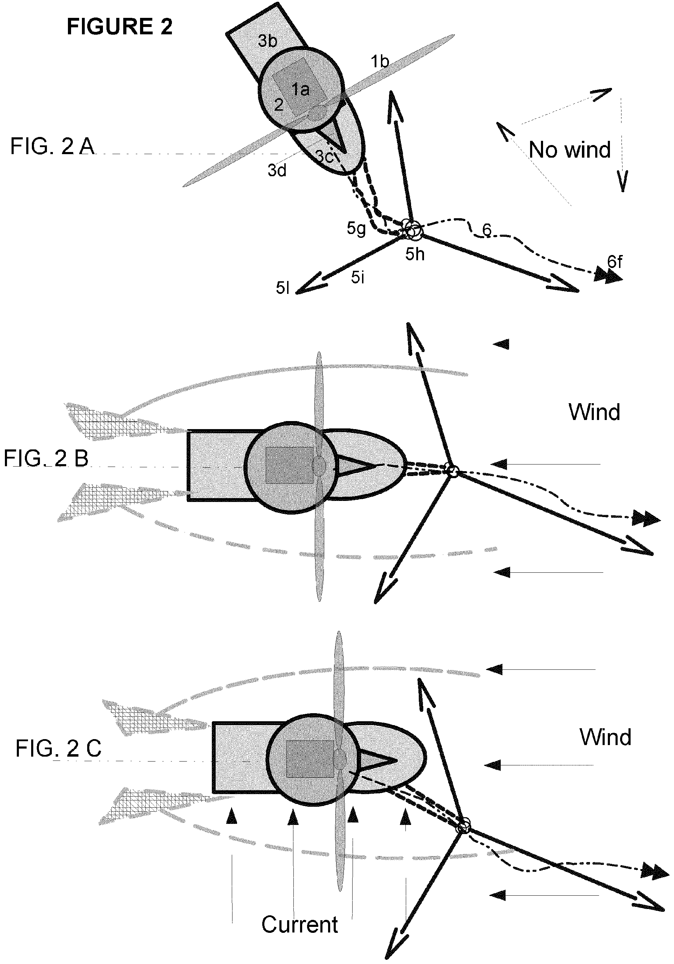

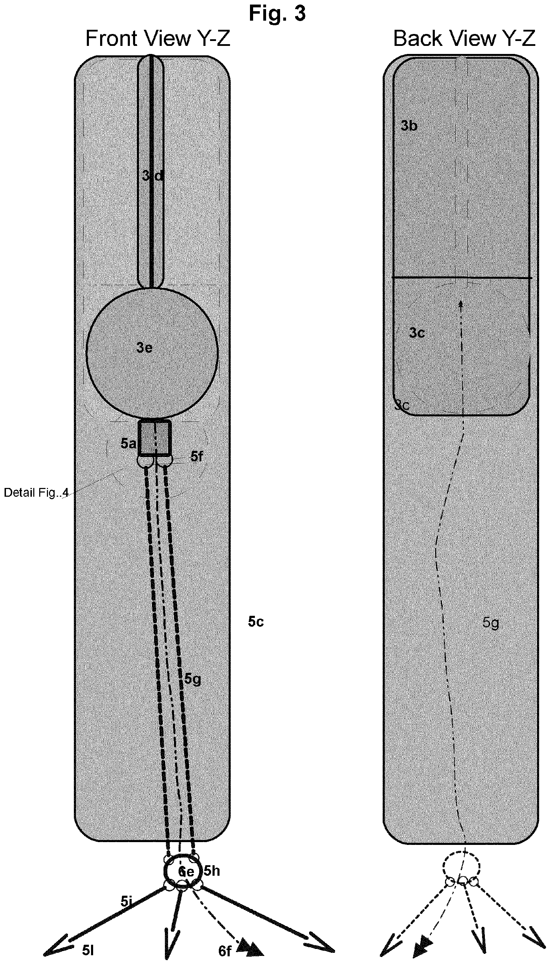

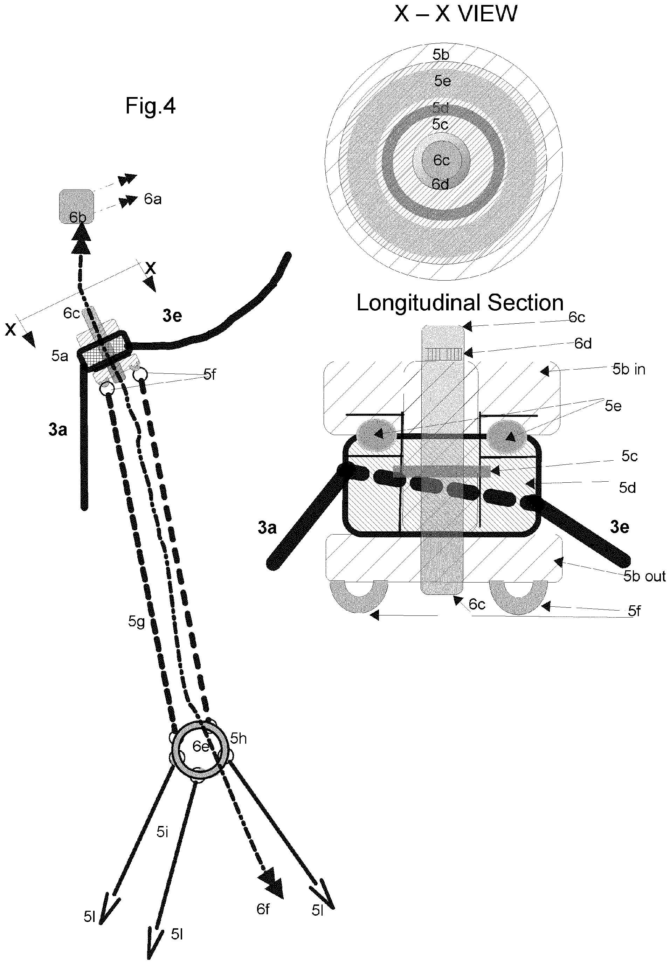

This foundation self-yaws naturally and surges downwind than the mooring link, achieving both target to keep the rotor (1b) of the HAWT unhindered windward and to minimise the effect of sea forces on its stability. In the presence of wind, this is the stable natural position of the moored Tail Spar Buoy. (FIG.2B).

One novelty is to get an aft lateral area above W.L. with also reducing as possible the immersed aft lateral displacement, so to increase the sensibility of the buoy to the wind alignment with reducing the influence of transversal sea currents on lateral area, to the same alignment.

One other novelty of this design is to get a forward displacement to the buoy, so to move the hull buoyancy centre to fore. Both enable the keeping of the HAWT blades rotor to fore side, and then unhindered upwind at operative conditions, further reduce the impact of the sea waves to the main column.

The functionality of the HAWT floating system relates with its mooring/anchoring system (5) type, suitable to keep the position, to let the Tail Spar Buoy to yaw many times for year around anchoring line, at random combination of verses, by avoiding interferences and torques between mooring lines(5) and electrical power line(6). It is necessary the use of a system where the electrical and mooring lines are coaxial one each other. The electric cable(6) is always internal to the mooring/anchoring lines(5), both have proper swivel joints(6b,5a) to avoid each twisting. The electrical swivel joint (6a, b) it is in a dry void internal to the shell, the mechanical mooring bearing (5a) is below, at shell watertight hawse (5d).

The main cylindrical vertical structure of the spar is the main cylindrical column (3). It has a circular horizontal section for all the height, closed at top by the upper deck at about 1/3 of height above W.L., and at bottom at about 2/3 below W.L. The upper deck of the column 4 is the horizontal base (2b) for the wind turbine tower (1b). The circular tower centre it is so that the main weights centre of the HAWT is to the main axes of the column. The net height of the tower starts from the base (2b) at the upper deck of the column. A bulb below W.L. (3e) is the forward side, which has a straight vertical angulated stem (3d) above W.L. also. The bow bulb (3e), united forward to the column, consisting in an horizontal cylindrical hull closed at its forward with an hemisphere shell. It is the first underwater volume of the foundation buoy to encounter upwind incoming wind-waves. As waves meet the bow then the stem (3d) breaks the water wall, with reducing the impact at the main column. Further, water particles move towards the stern along the entire length of buoy. Nevertheless, the pressure of the water at the bow is higher, there is a peak of pressure, and thus gives rise to a bow wave. Therefore, with a straight bow, there is always an increasing of wave at the bow. Thus, all the power of waves, transferred to the main column, affects the stability of the floating foundation. Waves running towards stem modify the geometry of buoyancy volume distribution along the buoy and so increase pitching. Otherwise, the introduction of another discontinuity below the waterline at the bow, in front of the stem of the ship, it will itself give rise to another wave at its foremost point. It creates a beach, so to force the waves to flow up and over it forming a trough. Trough and peak of pressure at stem ideally delete the impact of waves to the base of the main column; in any case reduce it a lot. Furthermore, it results in a reduction of wave resistance of the buoy; it is also equivalent to reduce the variation of hull geometry and its buoyancy, along the immersed shell. The bulb fore extension with maintaining the width, enables its effect for an open ahead sector of about 60°, to limit the direct impact of incoming waves. The Tail Spar Buoy trim is determined by centre of gravity position than the buoyancy centre. The bulb displacement as buoyancy volume, it is enough to shift the buoyancy centre of the entire buoy hull to forward, so to enable the positioning of the rotor to the forward side. It gets the volume fore and so keeps the vertical alignment between the weight long position (XG) and the long position of buoyancy centre (XB). At bow, close to W.L., the stem (3d) is a shape as bow vertical profile, that diverts waves and their loads acting on the spar buoy itself.

The aft appendage of the main column, called tail hull (3b), it has the surface of over-structures above w.l. useful for the fast alignment of the buoy also with lower speed of wind. The hull after the column (3b,c) has a cylindrical hull, longitudinal axes, and U-shaped transversal sections with breadth smaller than the main column diameter.

So above water line the aft hull (3b), to the main column is a natural tail exposed to wind flux, it aligns the Tail Spar Buoy windward than the mooring link at bow, it is top closed by an upper deck at the same height of the main column. Below W.L. the tail hull (3c) is limited, because the action of waves and currents lateral to the immersed hull could disturb the stability of the windward alignment. At first, it has a breadth less than the diameter of the column, so to avoid a direct smash of worst aligned waves. However, the tail hull has an immersed leeward displacement (3c); it is less than the fore appendage. It acts for the correct trim purpose of the all spar buoy; it has minimized immersed lateral surfaces, to avoid yaw misalignment. Longitudinal area of the bulbous bow is at the opposite side of the area of the tail hull, than the vertical turning axes, so that when a transversal current push laterally the spar buoy, so the turning moment is lower than the righting moment due to the wind on over structures. The turnable forces are below than the aligning forces and it increase stability with the wind alignment. Under a transversal current, the entire foundation tends mainly to sway, but parallel to the wind direction. (FIG.2C)

The design of the ballast system (4) configuration is to optimise immersion and trim of the hull, in different environment conditions. Ballast system capacity is consisting of two sand tanks (4b) for fixed ballast and one seawater tanks (4a), located inside the column and other three tanks (4a) dedicated to seawater along the hull.

The ballast piping active system is consisting of piping interconnection between structure tanks themselves and outboard with the relative transfer pumps, as common in marine vessels. The ballast system allows optimising three main drafts of the Tail Spar Buoy intended for three different conditions of operation. The three main configurations for capacity ballast distribution are the following:
Towing Mode: when Sand tanks (4b) are full and seawater ballast tanks(4a) empty.
Operation Mode: when Sand tanks (4b) are full, the lower seawater tank in the column (4a) full, other (4a) tanks empty;
Heavy Weather Mode: when all sand Tanks and seawater tanks are completely full.

All the three ballast configuration modes are characterized by the fact that tanks internal medium (seawater or sand) has limited free surfaces. Foreseen diaphragms internally to tanks reduce any slushing, for further increasing of dynamic stability.

The availability of space inside the hull enables the possibility to move weights of internal components of the system and so to modify the position of the gravity centre. This comprises dry internal spaces to use for the electric and mechanical mooring devices, storage of electric power within the hull, store spaces, working areas and working crew accommodations.

The mooring system type, it is so designed to keep the floating spar-buoy in its natural position, to let it to yaw, with the bow and the turbine blades plan exposed upwind. The Tail Spar Buoy could yaw many times for year around anchoring line, at random combination of verses. This is real the possibility that the electric cable (6), lying to the seabed to get power onshore, could interfere with the mooring/anchoring system (5), then procuring unexpected loads. The Tail Spar Buoy mooring system avoids said interferences and torsional loads. The electrical and mooring lines are coaxial one each other, where the electric cable (6b) is internal to the mooring ropes system (5). At fore side of the main column, just below the bulb, it is the mooring link. Its position is suitable to minimize the moment created between hull buoyancy reactions and forces along the mooring system lines. It is so close to the waves' impact zone of the bow bulb to hold induced stresses and moments so to damp movements' amplification.

The mooring link to hull, it is consisting in a watertight mechanical bearing (5a); it composing as common in two concentric cylindrical parts rolling one on the other(5b; 5d). At the hawse eye, the external cylindrical bearing part (5d) is solider to the shell and it is the support of the axial mooring load. The circular rail for bearing balls (5e) is above; it supports the upper internal rotating bearing part (5b in) that turns. The internal bearing (5b), it is consisting in two main united parts: there is the upper internal (5b in) support, it is solider to the lower flange outside the shell (5b out). They are free to turn than the intermediate external bearing part (5d) united to the shell.

The two bearing parts are slipping through a bearing balls crown (5e), below the upper side of the part internal to the shell (5b in) and the intermediate external bearing part (5d) welded to the shell hawse. Between these two slipping parts of the bearing, the sealing rings (5c) grant the water tightness of the mechanical bearing. Internal to the central hole of the mechanical bearing (5b) it is the tube (6c) for the passage of the electric cable. Internal to this tube are the sealing for the watertight passage of the cable (6d). Two mooring links (5f) are at the lower side of the bearing outside part. The hawse tube (6c) lower exit, from where the electrical cable lies down to the seabed, it is between the two ropes links (5f). From these two links of lower flange of the bearing, the two parallel lengths of mooring ropes (5g) lee down to the mooring ring (5h). In its simplest shape, is called ring (5h) connected to the lower anchoring system it is consisting in a simple closed shape, proper to be pull and to maintain the distance between mooring ropes upper shackles as common methods. It has two shackles (OO) at upper side to the two mooring ropes (5g) and three at its lower side (OOO). Through them, the three anchoring lines (5i) are connected to consisting of three lengths of chains, which lie down to the seabed, to three anchoring devices (51) fixed to ground, as vertexes of a triangle.

Three anchors at about positioned at same distances in way to maintain same angle of 120° on horizontal plan between chain lengths should be a solution. The parallel upper side mooring lines should have an angle to the vertical as possible, to damp the buoy movements. The anchoring chain lengths should be variable as per sea depth. Anchoring devices (5f) should be suitable to seabed geotechnical type. The electrical cable (6) starts from its electrical board tower connection (6a) then to its electrical swivel device (6b) inside the hull, which works respectively to withstand the cable weight and to get the electric power, despite the axial rotation. The electric cable from internal to the hull, it passes through the watertight hawse tube (6c) hole inside the internal turnable part (5b) of the mechanical bearing. It lies down internally to the coaxial double mooring lines (5g). It goes down between them to the connection-mooring ring (5h). It crosses inside the ring (6e) and below it alights to the seabed, always internal to the three lengths of chain (5i), and then goes to the link to on shore (6f).

Details of connections are common to the subsea technology state of art, which gets the main common features of mooring and anchoring for design of this specific mooring system, in an offshore marine environment.

### Advantageous effects of invention

This tail spar buoy as offshore floating foundation, offers the opportunity to keep an HAWT upwind at operative quote, so that its blades plan is oriented perpendicular to the air linear flux and it is exposed unhindered upwind, as the onshore common towers. The natural yawing tendency to expose turbine blades plan upwind is implicit in the Tail Spar floating foundation design when wind blows, it means when there are operative conditions. The use of a turnable mooring system allows the using of this Tail Spar Buoy as passive self-yaw foundation of a HAWT. Then it can to self-yaw and then to work without human, mechanical active means either electronical control. Other advantageous aspects of this invention regard the compactness and simple shape of the buoy. Its compactness in shapes and the simplicity of working of this Tail Spar buoy includes advantages at every level including its relative autonomy of movements under the wind action with maintain the stability, to keep the HAWT operative. This Tail spar Buoy supports some hundred tons, at top of the tower where accelerations are more. Any type of mechanical system should be highly dimensioned to support unexpected forces without faults and itself increase weights. The possibility to miss any type of yawing mechanical system at top of the tower, with a reduction of weight at top, it is an advantage.

Its compactness improves the efficiency of construction and reduces the necessary supply for mounting and operation. The Tail Spar Buoy safety capacity to change easily displacement by integrated ballast system it is an advantage.

Three main ballast conditions are the following: towing condition, operative condition, safety condition. Towing condition: with sand ballast tanks full and seawater empty 4b full, 4a empty. It means that the floating Tail Spar Buoy can be prepared and mounted at docks, then it town to the designated sea area by a supply vessel, it is ready to be connected to the mooring/anchoring system and to the electrical line.

Operative condition: with sand ballast tanks and one of seawater full: 4b, 4a inside the column full, others 4a empty. When the mooring/electrical connection work, then the seawater ballast tank inside column filled and the Tail Spar buoy is productive.

Safety condition: with all ballast tanks full, 4a and 4b. If the sea environment conditions get worse, then all ballast tanks are full.

The availability of space inside the hull enables the possibility to move some weights and so to control the position of the gravity centre. This also comprises to use dry internal spaces as: Storage and working protected areas for maintenance activity, auxiliary spaces for heavy machinery at water line height. The compactness of the Tail Spar Buoy allows the conditioning of the internal spaces, from external sea salted wet atmosphere, for longevity of all machineries with less maintenance inside nacelle at top of the tower. It is the option to storage electric power in a space within the hull, to board fuel cells so to furnish a constant average of electric power on shore. This is an advantage in energy market. It is the chance to get the power on shore through a transportation service of H2, with avoiding electric cables lying from the buoy to onshore. Further, the use of the internal electrical swivel device, which is coaxial to the mechanical mooring bearing, enables this Tail Spar Buoy to get directly electric power onshore. The electrical bearing device is protected in a dedicated local inside the shell; below it, the mechanical bearing space at shell is accessible. The maintenance of the internal components of the system is easier, safe and protected by the external hard environment, for the possibility to work inside the hull. The Spar Buoy internal spaces can accommodate some person for some days. The advantage to have the blades turning always at bow leaves a free operation safety area aft the tower at upper deck, free from upper blades turning at aft side, so possible on board with limited interruption of energy production. The natural tendency of the Tail spar buoy to yaw naturally for aligning blades plan unhindered upwind helps the management of the system. Anyway, the choice of main features is basic to get necessary qualities to this Offshore Floating HAWT System, for functioning. Every component of the system could also be more efficient, but the system is itself stable. Many advantageous possibilities are available on this Tail Spar Buoy, between the HAWT automation system and the floating foundation moored system will be useful some interfaces, for communication to correct trim by auto-ballasting and for optimising the electric power delivery to onshore. It is the option to have an UPS battery package on board for Automation self-power supply. Further the option to board a heavier transformer, so to have high-tension output to reduce loss to get power so far on shore.

The mooring mechanical system is proper to traction loads of the anchoring system, to keep the position of the spar buoy. It has two parts: the lower one called anchoring, it is fixed to the seabed and its length is variable as the depth of the sea area; the upper one called mooring it is of turnable type and its length is the same for every depth of sea area. This is an advantage to limit the circle diameter where it turns during functioning and to regulate the mooring upper side. The feature this mooring/ anchoring system of wind turbine foundation floating buoys is that only the lower anchoring part must counteract the horizontal torque exerted on the anchoring to the sea bed. The three components of the system, Tail Spar Buoy, Mooring, Anchoring are more manoeuvrable. These features should be suitable to impulse the improving of the size of the system, and shapes optimisation.

### FIGURES: 1, 2, 3, 4. References

1HAWT
2 Tower
3 Floating Foundation: Tail Spar Buoy
4 Ballast System
5 Mooring/Anchoring
6 Electric Power Line
1a Nacelle united to tower
1b BladesRotor
2a Tower
2b Tower base to column top
3a Hull Main Column
3b Aft Tail Hull Over Structure
3c Aft Tail Hull below W.L.
3d Bow vertical stem
3e Bow Bulb below W.L.
4a Sea water ballast tanks 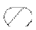
4b Sand ballast tanks 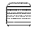
5a Watertight Mechanical Bearing
5b Rotating bearing part (inside/outside)
5c Watertight Sealing
5d External bearing part solid to shell
5e Bearing balls rail
5f Two mooring links
5g Two parallel mooring ropes
5h Mooring / Anchoring Ring
5i Three Anchoring lines
51 Three Anchorage devices
O Shackle
6a Electrical Board tower connection
6b Electrical Swivel device
6c Cable Watertight Tube
6d Cable Watertight Tube Sealing
6e Cable passage inside ring link
6f Cable bottom link to onshore

### Description of carrying out the invention

In design, it was considered the construction of a prototype of the floating structure as base for about 1MW Offshore Floating HAWT at 65mt of height with a weight 190 t.

The model is in progress, data:
Displacement: 3766,747 t - Volume 3674,875 m^3
Lwl 18,5m; Laa(after all) 25 m - Immersed depth 34 m
Column Beam wl 10 m - Tail Hull Beam 9,0 m - Bow Hull Beam 9,0 m - Upper Deck height above W.L. 16 mt WSA 1599,186 m^2 - Waterplane area 146,157 m^2 - Max cross Column sect area 338,981 m^2
Cp and Cb 0,586 - Cm 1 - Cwp 0,792
LCB from zero pt 11,506 m - LCF from zero pt 8,089 m
KB 20,382 m - KG 18,5 m
BMt 0,364 m - BM1 0,862 m -
GMt -13,354 m - GM1 -12,956 m
KMt 20,646 m - KMl 21,044 m

Design Material of hull is steel plates and profiles. Other materials, with attention to the distribution of weights than the shape of the hull, are considering. At this stage the design was simplified as possible for economic reasons.

This Tail Spar Buoy Hull is the floating structure of the foundation, it is consisting in a steel marine hull structure and it follows traditional general criteria of construction of a ship hull. The external shell has simplified shapes of formed steel plates connected together by welding. The hemispheric bulb of the bow is common in the industrial sector of pressure vessels construction. Other shell shapes are simply plane and cylinders intersected each other. The hull structure is framed by transversal watertight bulkheads and open reinforced frames, decks and by longitudinal ordinary structure consisting of bulb bars and girders. The main column is the vertical cylindrical support of the tower and the HAWT. Over structures of the tail hull are designed lighter for wind keeping, but the same just back of the column have structural function also to support. The area of the main column at the bow at W.L. is over dimensioned against impact of waves. The hawsehole pocket of the forward shell of the column below the bulb, it is reinforced against possible interferences with the mooring line.

The realisation of the Tail Spar Buoy Hull involves shipyard space and steel workers, welders, cutters grinders, painters, piping fitters, further system manufacturers for mechanical and electrical components of the system.

The necessary experience is related to fields' technology in marine and subsea sectors, which could be improved on specific targets. The available internal space is useful for optimising the distribution of weights and marine operation optimisation. The space internal of the column above the hawsehole pipe is dedicated to the mooring mechanical and electrical bearing devices. The ballast system is traditional with double use of sand and seawater distributed in dedicated tanks. Three main ballast conditions were optimized: towing condition, operative condition, safety condition. The three main condition obtained with framed structural tanks as possible full or empty, it means without liquid free surface corrections. After the hull construction, it has the possibility to fill sand ballast tanks at first to get the self-floating safety displacement, when still floats, moored at docks. At this condition, towing e mounting of HAWT and mooring link in safety conditions with limited use of assistance.

The Tail Spar Buoy during operation has the W.L.at design displacement, one seawater tank and two sand tanks completely full. Further in the case of weather conditions are so heavy to stop the turbine, the foundation with all the ballast tanks full, has higher draft, maintaining verticality of the tower and increasing the safety of the system.

The realisation of a prototype that can produce electric power, to get it onshore, is the first investment to do so to study best solution to increase efficiency and quality. The design of this flat spar buoy based on hydrodynamic principles, further calculations and computer fem simulation need at real on main principles, which are fixed. The analysis and testing of the real functioning of the moored prototype should be the stop or the start of a further development of optimised shapes of hull and operative devices. This to obtain best performances from the mooring system, mechanical and electrical devices and the ballast system necessary for safe functioning of the HAWT floating system to get power onshore.

### Industrial Application within the meaning of Article 57.R. 42(1)(f)

This Tail Spar Buoy is a Floating Foundation anchored on deep-water seabed; it is capable to drive and to keep an HAWT unhindered upwind at operative altitude, so to produce electric power, further by electrical line to get it from offshore windy sea areas to onshore.

## Claims

1. A combination of a Horizontal Axes Wind Turbine (HAWT) and a Tail Spar Buoy comprising a floating foundation (3) of a tower (2) for an Horizontal Axes Wind Turbine;
where in the base of the tower (2b) is at top of a hull main column (3a)
wherein the tail spar buoy is asymmetric, with its vertical transversal plan along the axis of the hull main column (3a);
wherein the main vertical cylindrical circular column has forward and aft displacement appendages, respectively called Bulbous Bow (3d,e) and Tail Hull (3b,c);
wherein the horizontal axes wind turbine nacelle (1a) is fixed solidly to the tower (2a);
wherein blades rotor (1 b) and the bow (3d,e) are both to its forward side;
wherein the hull main column (3a) base of the tower is at about 1 /3 above waterline (W.L.) and
the other 2/3 of the main column is draft below the waterline;
wherein the Bulbous Bow is consisting of a displacement Bulb below waterline (3e), consisting in a horizontal cylindrical part with a forward hemispheric closure and a vertical straight stem post above waterline (3d) until the upper deck;
wherein the Tail Hull is consisting in a horizontal prism, tall to the upper deck (3b) and it is with U-section (3c) below waterline, that is aft closed with a transom stem;
wherein below waterline, the corresponding projected area on the longitudinal central plan of the Bow Bulb and its displacement are greater than the Tail Hull ones;
wherein the Tail Spar Buoy capacity comprises four ballast structural seawater tanks (4a), which are connected one each other by piping system to the sea, further two ballast sand tanks (4b) at bottom of the main column.

2. A mooring/anchoring system (5) with electrical (6) arrangements, of turnable type, for the tail spar buoy and the horizontal axes wind turbine of claim 1;
wherein just below the appendage called bulb (3e), a mooring link (5a) is at the shell on the fore side of the tail spar main column;
wherein the mooring link to the hull is consisting in a watertight mechanical bearing (5a), the system being **characterised in that** internal to the central hole of a mechanical bearing (5b) is a tube (6c) for the passage of an electric cable;
wherein two peripheral mooring links (5f) are at the lower side of the bearing outside part (5b out);
wherein the hawse tube (6c) lower exit, from where the electrical cable lies down to the seabed, is between two ropes links (5f);
wherein from these two links at the lower flange of the bearing, two parallel lengths of mooring ropes (5g) lee down to their shackles to a mooring ring(5h);
wherein in its simplest shape, a Ring (5h) is connected to the lower anchoring system and is consisting in a simple closed shape, proper to be pulled and to maintain the distance between mooring ropes shackles, as common method;
wherein the lower anchoring system from the lower side of the same ring is consisting of three lengths of chain (Si), linked below to the three anchoring devices (51) to ground, as vertexes of a triangle;
wherein all the mooring/anchoring system is coaxially integrated with the electric power transmitting cable (6),
wherein the cable starts from its electrical swivel joint inside the shell (6a), it goes out of the shell through the cable watertight tube (6c) internal to the hole of the mechanical bearing flanges (5b in, out) and lies down between the couple of mooring ropes (Sg),
it passes through the ring (5h,6e), finally lies to the seabed, to the electrical connection at ground (6f) always internally to the mooring/anchoring system.

3. The combination of a horizontal axes wind turbine and tail spar buoy in accordance with claim 1, wherein the appendage called bulbous bow has the bulb (3e) with a length of about 1/3 of the total length of the buoy, a breadth less than the column.

4. The combination of a horizontal axes wind turbine and tail spar buoy in accordance with claim 1, wherein the tail hull is consisting in a horizontal prism, tall to the upper deck (3b) and it is with U-section below water line (3c), with a breadth lower than the column, it is aft closed with a transom stem.

## Patentansprüche

1. Eine Kombination aus einer Windkraftanlage mit horizontalen Achsen HAWT (1) und einer Heckholmboje als schwimmendes Fundament (3) eines Turms (2) für einen HAWT (1);
Worin sich die Basis des Turms(2b) an der Spitze einer Rumpfhauptsäule befindet:
Worin ist die Säulenboje asymmetrisch als der transversale Vertikalplan entlang der Achse der Hauptsäule
Worin Die vertikale, zylindrische, kreisförmige Hauptsäule hat nach vorn und nach hinten gerichtete Verdrängungsanhängsel, die als Bulbous Bug (3d,e) und Heckrumpf(3b,c) bezeichnet werden.
Worin Die HAWT-Gondel (1a) ist fest am Turm (2) befestigt, wobei sich Rotorblätter (1b) und Bug (3d, e) beide an der Vorderseite befinden.
Worin Die Hauptsäulenbasis (2b) des Turms liegt etwa 1/3 über W.L. und die anderen 2/3 der Hauptspalte sind Tiefgang unterhalb des W.L.
Worin Der Bulbous Bug besteht aus einer Verdrängungsbirne unterhalb von W.L.(3e), bestehend aus einem horizontalen zylindrischen Teil mit einem vorderen halbkugelförmigen Abschluss und einem vertikalen geraden Vorstevenpfosten über WL.(3d) bis zum Oberdeck.
Worin Der Heckrumpf besteht aus einem horizontalen Prisma, das bis zum Oberdeck reicht (3b), und hat unter W.L. ein U-Profil (3c), das achtern mit einem Spiegelheck verschlossen ist. Worin Unterhalb von W.L. sind die entsprechende projizierte Fläche auf dem Längsmittelplan der Bugbirne und ihre Verdrängung größer als die der Heckrumpffläche.
Worin Die Kapazität der Hecksparboje besteht aus vier strukturellen Ballast-Meerwassertanks (4a), die untereinander durch ein Rohrleitungssystem mit dem Meer verbunden sind, sowie zwei weiteren Ballastsandtanks (4b) am Boden der Hauptsäule.

2. Ein Festmacher/Anker system (5) mit elektrischen Anordnungen (6), vom
drehbaren Typ für die Heckholmboje und die horizontale Windkraftanlage nach Anspruch 1;
worin direkt unter dem als Bulbus bezeichneten Fortsatz (3e) befindet sich ein Festmacherverbindung (5a) an der Schale der Vorderseite der Säule;
worin die Festmacherverbindung zum Rumpf besteht aus einem wasserdichten mechanischen Lager (5a),
das System zeichnet sich dadurch aus Im Inneren des zentralen Lochs eines mechanischen Lagers(5b) befindet sich ein Rohr (6c) für die Durchführung eines Elektrokabels;
worin an der Unterseite des äußeren Lagerteils(5b out) befinden sich zwei umlaufende Festmacherglieder(5f);
worin Der untere Ausgang der Klüse (6c), von wo aus das Elektrokabel bis zum Meeresboden verläuft, befindet sich zwischen den beiden Seilverbindungen (5f);
worin. Von diesen beiden Verbindungen des unteren Flansches des Lagers führen die beiden parallelen Längen der Festmacherleinen (5g) nach unten zum Festmacherring (5h);
worin In seiner einfachsten Form, Ring (5h) genannt, ist er mit dem unteren Verankerungssystem verbunden und besteht aus einer einfachen geschlossenen Form, die sich zum Ziehen eignet und den Abstand zwischen Festmacherseilen und Festmacherschäkelals übliche Methode aufrechterhält.
worin Das untere Verankerungssystem von der Unterseite desselben Rings besteht aus drei Kettenlängen (5e), die unten mit den drei Verankerungsvorrichtungen (5f) am Boden als Eckpunkte eines Dreiecks verbunden sind.
Worin Die gesamte Anlegen/Ankern system ist koaxial in das Stromübertragungskabel (6) integriert.
Worin Electrokabel beginnt mit seinem elektrischen Drehgelenk im Inneren der Schale (6b). Es tritt durch das wasserdichte Kabelrohr (6c) innerhalb der Öffnung der mechanischen Lagerflansche (5b innen, außen) aus dem Gehäuse aus und legt sich zwischen den Festmacherleinen (5g) hin, wobei es durch den Ring (5h, 6e) verläuft ), liegt schließlich am Meeresboden, an der elektrischen Verbindung am Boden (6e) immer intern zum Verankerungssystem.

3. Eine Kombination aus einer HAWT (1) einer Windkraftanlage mit horizontaler Achse und einer Heckholmboje nach Anspruch 1, worin die auf den Knollenbogen (3e) bezogene Verlängerung eine Länge von etwa 1/3 der Gesamtlänge der Boje hat, a Breite kleiner als die Säule.

4. Eine Kombination aus einer Windkraftanlage mit horizontalen Achsen HAWT (1)
und einer Heckholmboje nach Anspruch 1, worin der Heckrumpf aus einem horizontalen Prisma besteht, das bis zum Oberdeck (3b) reicht, und einen U-Abschnitt unterhalb von W.L. (3c), mit einer Breite, die niedriger als die Säule ist, ist es achtern mit einem Heckspiegel verschlossen.

## Revendications

1. Une combinaison d'une éolienne à axe horizontal HAWT (1) et d'un Longeron de Queue Bouée comprenant une fondation flottante (3) d'une tour (2) pour une HAWT,
Dans lequel la base de la tour (2b) est alla sommité de un colonne principale de coque (3a) dans lequel la bouée de longeron de queue est asymétrique, avec son plan transversal vertical le long de l'axe de la colonne principale (3a).
dans lequel la colonne circulaire cylindrique verticale principale comporte des appendices de déplacement vers l'avant et après,
respectivement appelé bulbeuse arc (3d, e) et coque arrière (3b,c),
dans lequel la nacelle HAWT (1a) est fixée solidement à la tour (2),
dans lequel les pales du rotor (1b) et la proue (3d,e) étant toutes deux situées sur son côté avant.
dans lequel La base de la colonne principale (2b) de la tour se trouve à environ 1/3 au-dessus de W.L. et les 2/3 restants de la colonne principale sont en dessous du W.L.
dans lequel Le Bulbeuse arc est constitué d'un bulbe à déplacement en dessous de W.L.(3e), constitué d'une partie cylindrique horizontale avec une fermeture hémisphérique vers l'avant et d'un poteau de tige droit vertical au-dessus de WL.(3d) jusqu'au pont supérieur.
dans lequel La coque arrière est constituée d'un prisme horizontal, haut jusqu'au pont supérieur (3b) et avec une section en U au-dessous de W.L. (3c), qui est fermée à l'arrière par un tableau arrière.
dans lequel en dessous de W.L., la zone projetée correspondante sur le plan central longitudinal du bulbe d'étrave et son déplacement sont supérieurs à ceux de la coque de queue;
dans lequel la capacité de la bouée à longeron de queue comprend quatre réservoirs d'eau de mer structurels de ballast (4a), qui sont reliés les uns aux autres par un système de tuyauterie à la mer, ainsi que deux réservoirs de sable de ballast (4b) au bas de la colonne principale.

2. Un système d'amarrage/ancrage (5) avec agencements électriques (6), de type tournant, pour la bouée à longeron de queue et l'éolienne à axe horizontal HAWT (1) selon la revendication 1:
Juste en dessous de l'appendice appelé bulbe (3e), un lien d'amarrage (5a) se trouve à la coque de l'avant de la colonne,
dans lequel le lien d'amarrage à coque, il est constitué d'un palier mécanique étanche(5a) ;
le système étant caractérisé en que interne au trou central du palier mécanique (5b) c'est le tube (6c) pour le passage du câble électrique.
Dans lequel deux liens d'amarrage périphériques (5f) se trouvent du côté inférieur de la partie extérieure d'appui (5b out);
dans lequel la sortie inférieure du tube d'écubier (6c), d'où le câble électrique descend jusqu'au fond marin, se trouve entre deux maillons de câbles (5f);
dans lequel a partir de ces deux maillons de la bride inférieure du palier, deux longueurs parallèles de cordages d'amarrage (5g) descendent jusqu'à un anneau d'amarrage (5h)
dans lequel sa forme la plus simple, appelée Anneau (5h) relié au système d'ancrage inférieur, il se compose d'une simple forme fermée, propre à être tirée et à maintenir la distance entre les amarres et les manilles comme méthode courante.
Dans lequel le système d'ancrage inférieur du côté inférieur du même anneau, est constitué de trois tronçons de chaîne (5e), reliés en dessous aux trois dispositifs d'ancrage (5f) au sol, comme sommets d'un triangle.
Dans lequel l'ensemble de l'agencement d'amarrage/d'ancrage est intégré coaxialement au câble de transmission d'énergie électrique (6). Il part de son joint tournant électrique à l'intérieur de la coque (6a). Il sort de la coque à travers le tube étanche du câble (6c) interne au trou des brides d'appui mécanique(5b in, out) et se couche, entre le couple d'amarres(5g), il passe à travers l'anneau(5h,6e ), se trouve enfin au fond marin, à la liaison électrique au sol (6e) toujours interne au système d'ancrage.

3. Le combinaison d'une éolienne à axe horizontal HAWT (1) et d'un Longeron de Queue Bouée selon la revendication 1, dans lequel l'appendice appelé proue bulbeuse présente le bulbe (3e) d'une longueur d'environ 1/3 de la longueur totale de la bouée, soit une largeur inférieure à celle de la colonne.

4. Le combinaison d'une éolienne à axe horizontal HAWT (1) et d'un Longeron de Queue Bouée selon la revendication 1, dans lequel la coque arrière est constituée d'un prisme horizontal, haut jusqu'au pont supérieur (3b) et présente une section en U au-dessous de W.L. (3c), qui est fermée à l'arrière par un tableau arrière. Au-dessous de W.L., d'une largeur inférieure à la colonne, il est fermé à l'arrière par un tableau arrière.
